# EUROPEAN PATENT APPLICATION

(11) **EP 2 741 272 A1**
(43) Date of publication of application: **11.06.2014**
(21) Application number: 12823585.0
(22) Date of filing: 03.08.2012
(51) Int. Cl.: G09B 21/02

(54) **WRITING, BRAILLE AND DRAWING BOARD FOR BLIND OR VISUALLY IMPAIRED PERSONS**

(30) Priority: 05.08.2011 ES 201100930
(71) Applicant: Kaparazoom, S.L.U., 46018 Valencia (ES)
(72) Inventor: VILLAR CLOQUELL, Javier, 46008 Valencia (ES)
(74) Representative: Isern-Jara, Nuria
(86) International application number: PCT/ES2012/000224
(87) International publication number: WO 2013/024190

(57) **Abstract**

The invention relates to a board for blind persons, which makes it easier to write, draw and learn shapes through positive relief elements that can be reused. When writing or drawing, it is possible to check what has been done and to correct errors detected with the fingertip (4). Said board has a grid (3) for picking up, putting down and storing small-size relief elements (1). Said relief elements are placed on a panel (2) with a matrix of holes, forming letters and drawings. There is a means for making copies of what was written or drawn. Drawing tools or stencils that can be attached with pins to the matrix of the panel are provided. Once the activity is finished, there is a means of collecting the relief elements and storing same in the container in the panel or the grid.

## Description

### Field of the Art

The present invention is comprised included within the sector dedicated to educational applications and, in particular, devices intended to improve the quality of life for persons with blindness or visual impairment.

### Background of the Invention

Since the braille alphabet was created in the mid-nineteenth century, there have been different systems for the blind or visually impaired to be able to write in Braille, as well as draw.

There are traditional writing devices consisting of etching dots on a sheet of paper on a semi-rigid surface using a stencil. Writing using these systems has to be done in reverse. Once written and the paper is turned over, the braille can be read correctly. These are extremely complex writing systems, many mistakes being made by having to write in reverse, and not being able to check if what has been written is correct until the paper is turned over. In the case of errors being made, the current method of correction consists of flattening the punched area, this method thereby creating confusion when reading, as, on occasion, it is unclear whether this is a marked or unmarked point.

The board proposed in the present invention for blind persons reproduces writing in positive relief, making it possible to read while writing, as well as being able to correct immediately.

The state of the art describes devices for learning braille that have been used since the late nineteenth century, and that use panels full of holes. These panels have twelve hemispherical holes to form only two signs or braille letters. Metal spheres with a diameter greater than 1cm are placed on these holes, such that they can be handled in a simple manner using the hands, and, in this way, learn braille by practicing.

The board for blind persons proposed in the present invention uses a panel with a larger matrix of holes, in order to write braille and make simple drawings, using spheres adapted to the standard braille size. These spheres are difficult to handle with the hands, which is why the present invention proposes a grid for picking up and releasing said relief elements easily.

Patent documents such as CN 87210649 and CA 2271495 have been found to share some technical similarities. Both use a perforated grid, into which cylinders are inserted individually or in groups, which can be used to form letters in braille or simple drawings. This system is entirely manual, being necessary to turn the panel upside down, pressing thereon, in order to remove a part. It is difficult to remove the correct part using this procedure, as it is easy to lose track of the position when the panel is turned over. The individual or grouped cylinders of a container will need to be picked up each time it is used. Using these devices makes this a slow and complicated procedure.

Unlike these patents, the board for blind persons that is proposed in the present invention has a grid with a container where the relief elements can be stored. Drawing is speeded up as the relief elements from the container do not have to be picked up or put down each time.
Corrections can be made immediately.

Patent CN 200947262 should also be mentioned, as it describes a tool for learning to write braille letters and signs, by means of different sized metal spheres or semicircles, picking up the spheres by using a magnet. When picking up the spheres with this magnet, nearby spheres are also attracted, therefore, all or part of the writing is erased. Handling spheres that have a diameter of less than 3.5 mm is extremely complicated.

The new writing and drawing board for blind persons proposed in the invention herein is provided with a grid for handling spheres <3.5 mm individually, conveniently and simply, thereby preventing the unwanted areas from being cleared when using the magnet to pick up the spheres.

In patent CN 200947262, only braille alphabet letters can be written, while the new writing and drawing board for blind persons that is being proposed can be used to draw, write and even make copies of drawings made on paper, using a stamp pad.

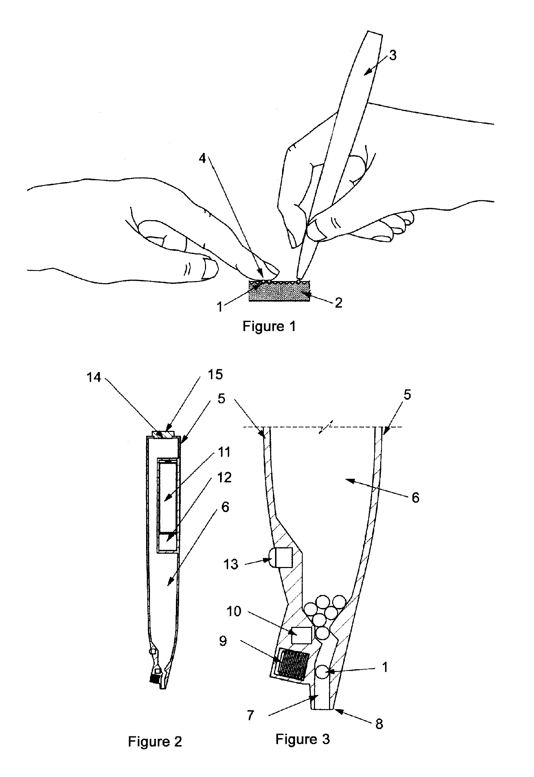

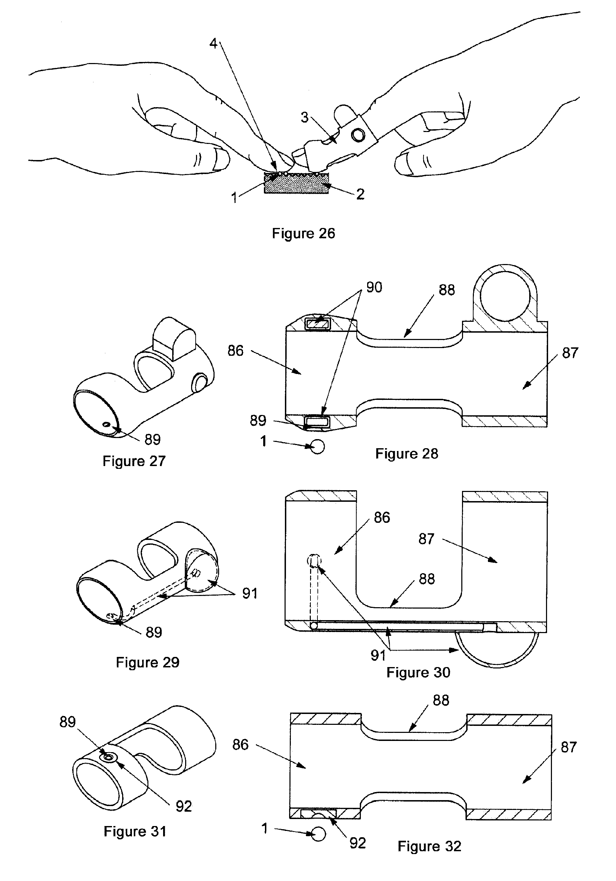

Patents JP 2569269 and JP 2007065604 describe a grid with a dots in relief, on which a paper and writing stencil in braille is placed, stamping the dots required to form the letters using a punch with a concave head. These patents improve the classic writing system, although it is not possible to verify what has been written until the stencil has been lifted. Conventional techniques have to be used to correct errors. The new board for blind persons that is being proposed has a grid (3) (Figures 1 and 26) which makes it possible to make corrections while writing. To make paper copies, a manual pad is used that may occupy all or part of the drawing area.

Patent CN 201331859 describes a perforated grid with paramagnetic parts that can be lifted individually by using a magnet in order to write braille. Corrections can be made by erasing an area using a more powerful magnet on the opposite side of the grid. Correction is not precise, and areas can accidentally be erased. In addition, when pressing to read, or even by pressing down the hand, the relief elements can become deselected, changing the meaning of the symbols, therefore it is necessary to read with a perfectly even hand. The board for blind persons of the present invention proposes solutions with relief elements made of diamagnetic or paramagnetic material, while making it possible to correct while writing, and being able to correct individually. Copies of drawings on paper can also be made, using a pad. Versions are proposed in which electromagnets are used to prevent accidental errors, as the electromagnet only generates a magnetic field when electric current flows through the winding.

In patent JP 57032995, copies are made of a braille text, previously defined with pin punches and, subsequently with rollers, pressure is created on the pin punches, thereby stamping the paper. This procedure is carried out between two sheets and is only intended for braille letters. The stamping method for making copies proposed in the present invention is different to that of patent JP 57032995 and to the automatic systems in printing presses, typewriters, or mechanical or thermal printing presses. To make paper copies, a manual pad is used that may occupy all or part of the drawing area.

There are no known teachings in which the braille writing or drawing is done by placing and removing the relief elements using a grid for such use. The board proposed in the present invention solves the problem caused by the difficultly in handling small relief elements used for braille writing and drawing.

### Object of the invention

To equip the blind or visually impaired with a new tool to write in braille and make drawings simply, conveniently and efficiently.

### Description of the Invention

The present invention proposes a new board which makes it possible for persons with blindness or visual impairment to write and draw. Writing and drawing on this board is performed by using a grid (3) to place relief elements (1) on a panel (2) which has a matrix of holes. The blind person can read the writing or draw using their fingertip (4).

The new board for the blind or visually impaired provides a quick and practical method, proposing solutions to different problems related to drawing and writing for blind persons.

The difficulty in handling small relief elements is solved by using one or more grids in order to pick up the relief elements and put them down them individually. This grid makes it possible to store one or more relief elements and place them in the matrix of holes on the panel by conventional means such as magnets, electromagnets, electric motors, mechanical elements, adjustments using pressure, air vacuum, capillarity, tensioners, bearings, gears, followers, straps, clips, strips, cams, hydraulic elements, springs, static electricity or viscous surfaces, thereby configuring the texts or drawings.

Another problem relates to securing these relief elements to the panel, therefore, different solutions have been proposed such as using magnets, electromagnets, interference fit or adjusting pressure to secure to the panel.

In this invention, writing or drawing is not permanent, but simple solutions are planned to make copies by stamping, whether a particular surface or all the contents of the board.

To solve the use of stencils or drawing tools on this board, these elements have a number of pins that fit into the cavities in the panel.

Once the writing or drawing has been completed, picking up or quickly erasing the relief elements is solved by using a cover in order to carry the relief elements to a container or using a collector with a magnet or electromagnet. This container may be removable and be provided with a nozzle for loading the container of the grid.

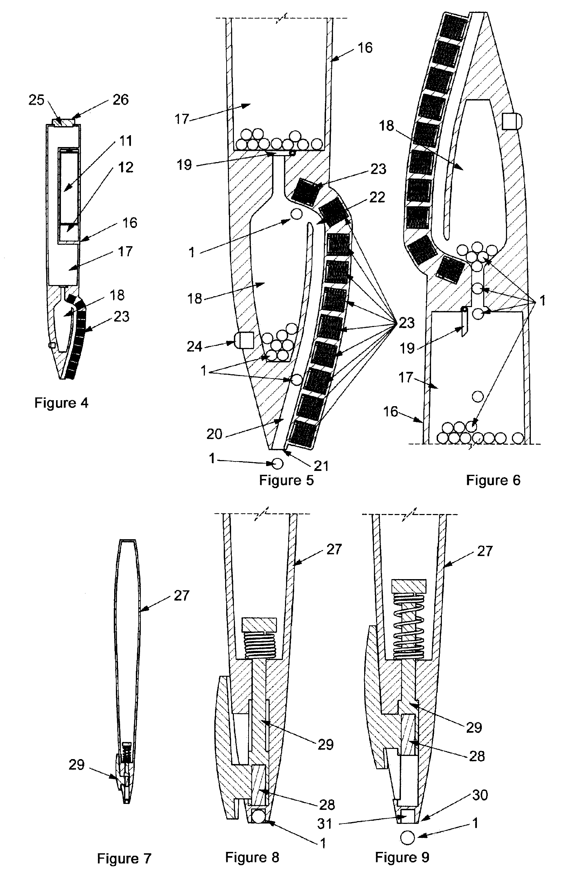

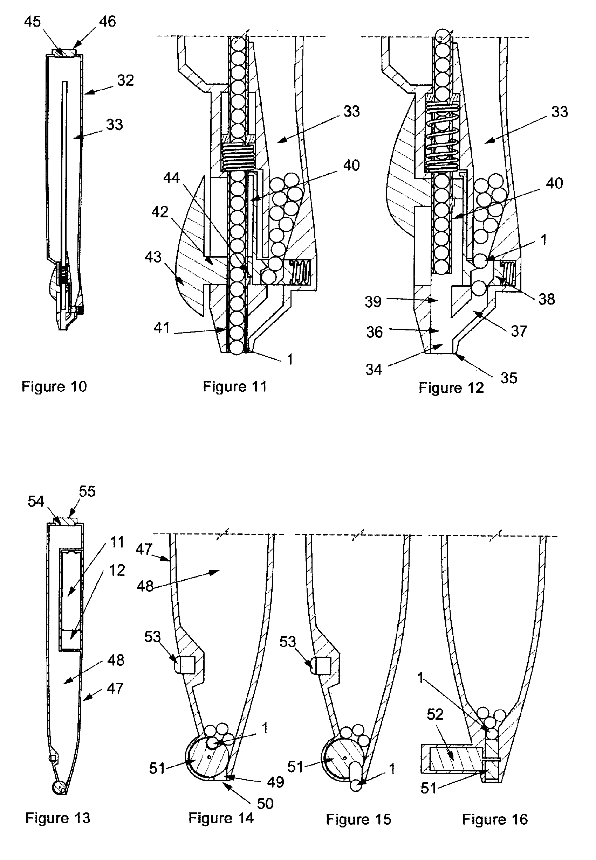

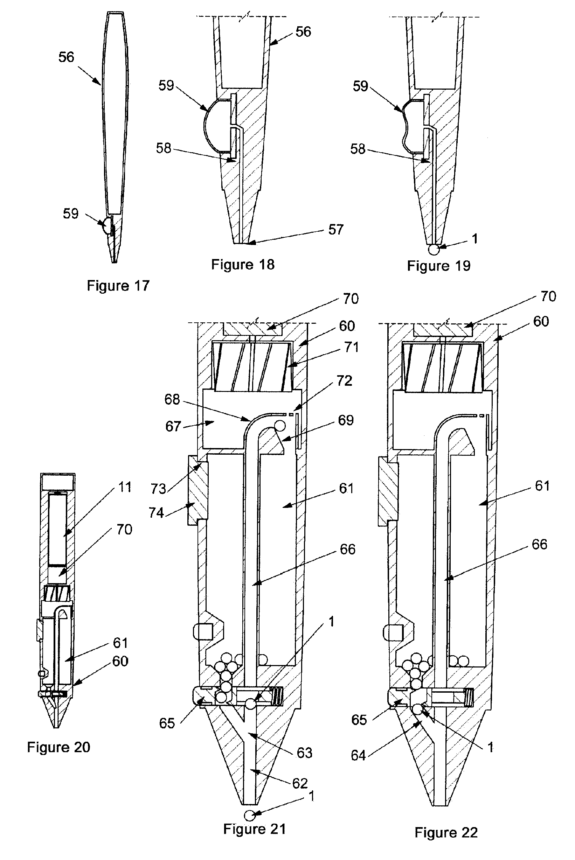

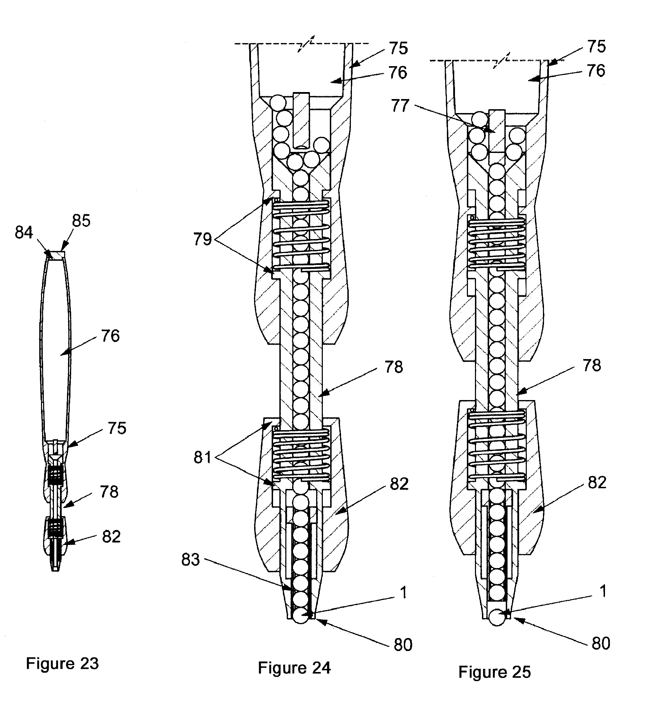

Provision has been made for different versions for the grid that places the relief elements on the panel , in the following manner:
- The first grid proposed is for putting down the paramagnetic relief elements (1) (Figure 3) individually in the matrix of the panel by means of one or more magnets and electromagnets. This grid is formed by a body (5) (Figures 2 and 3) that contains a container (6) (Figures 2 and 3) for storing the paramagnetic relief elements (1) (Figure 3). The container is connected by an outlet tube (7) (Figure 3) to the tip (8) (Figure 3), between said container and the tube there is at least one permanent magnet (10) (Figure 3) which prevents the relief elements from exiting the container by gravity. There is at least one electromagnet (9) (Figure 3) located next to the outlet tube and near the tip. This grid is provided with the appropriate power supply (11) (Figure 2) and conventional electronic control (12) (Figure 2). It is provided with a magnet (10) (Figure 3), located between the electromagnet and the container. When the button (13) (Figure 3) is pressed, the electromagnet whose magnetic force is greater than that of the magnet is activated and is attracted to the relief element (1) (Figure 3) via the outlet tube to the electromagnet. When the button is released, the electromagnet stops generating a magnetic force, which causes the relief element to drop by gravity and exit the grid. The container includes a cap (15) (Figure 2) through which the relief elements can be removed and inserted.
- A grid to pick up and put down paramagnetic relief elements (1) (Figure 5) individually, using at least one or more electromagnets, is proposed below. This grid consists of a body (16) (Figures 4 and 5) which contains a container (17) (Figures 4, 5 and 6) separated by a conventional flap valve (19) (Figures 5 and 6) of the collection container (18) (Figures 4, 5 and 6) for storing said paramagnetic relief elements (1) (Figures 5 and 6). There is an inlet tube (20) (Figure 5) which ascends to an upper portion of the collection container (18) (Figure 5). There is at least one electromagnet (23) (Figure 5) next to and along the inlet tube. When the button (24) (Figure 5) is pressed, the electromagnets are activated in an activation and deactivation sequence in order for the relief element to move from the tip (21) (Figure 5) to the last electromagnet located at an upper portion of the collection container. At the end of this sequence, the relief element falls into the collection container by the force of gravity. The grid is provided with the appropriate power supply (11) (Figure 4) and conventional electronic control (12) (Figure 4). When the body (16) (Figure 6) is placed in the opposite direction to the force of gravity, the conventional flap valve (19) (Figure 6) opens and the relief elements (1) (Figure 6) transfer from the collection container (18) to the container (17) (Figure 6). The container has a cap (25) (Figure 2) through which the relief elements can be removed and inserted.
- A grid to pick up and put down paramagnetic relief elements (1) (Figures 8 and 9) individually, using at least one or more magnets, is proposed. This grid body (27) (Figures 7, 8 and 9), contains at least one magnet (28) (Figures 8 and 9) attached to a piston (29) (Figures 7, 8 and 9) and mechanical means for moving said magnet towards the tip (30) (Figures 8 and 9) and moving it away from the latter. By moving the magnet towards the tip, by actuating the piston, the magnet is in the closest position to the tip and the relief element that is partially inserted into the container (31) (Figures 8 and 9) is attracted by the magnetic force of the magnet, being placed on the tip. When the piston is moved in the opposite direction to the tip, the relief element is no longer attracted by the magnet and falls by the force of gravity, wherein the relief element can be placed on the panel or in a container. Versions of this grid are provided with an electromagnet positioned on the tip, which would perform the same functions as the magnet (28) (Figures 8 and 9) and is provided with the appropriate power supply and conventional electronic control.
- A grid to pick up and put down paramagnetic relief elements (1) (Figure 11 and 12) individually, using at least one magnet and conventional mechanical elements is proposed. This grid is formed by a body (32) (Figure 10) that contains a container (33) (Figures 10, 11 and 12), for storing the relief elements. It has an inlet-outlet tube (34) (Figure 12) connected to the tip (35) (Figure 12). This inlet-outlet tube has a Y branch (36) (Figure 12), an outlet tube (37) (Figure 12) branching from this Y branch connected to the container (33) (Figures 10 , 11 and 12), whose path has been interrupted by the conventional dispensing mechanism (38) (Figure 12) such as a gate valve, gear, wheel or lever. By actuating the dispensing mechanism, a relief element from the container is transferred to the outlet tube by the force of gravity. An inlet tube (39) (Figure 12) branches from this Y branch, through which a collection tube (40) (Figures 11 and 12) is moved, which connects to the container, wherein the end of the pickup tube that is oriented towards the tip is a magnet (41) (Figure 11). The grid is provided with a conventional slide (42) (Figure 11). When the slide moves towards the tip, a relief element is inserted into the pickup tube (40) (Figure 11) which pushes the remaining relief elements to the container. The relief elements on the inside of the pickup tube do not fall by the force of gravity because the magnet (41) (Figure 11) retains them by the magnetic force. The container has a cap (46) (Figure 10) through which the relief elements can be removed and inserted.
- A grid to put down relief elements (1) (Figures 14, 15 and 16) individually, using at least one electric motor and conventional mechanical elements, is proposed. This grid body (47) (Figures 13 and 14) contains a container (48) (Figures 13 and 14) for storing relief elements, connected by an outlet tube (49) (Figure 14), between the outlet tube and the container there is a wheel (51) (Figures 14 , 15 and 16) with at least one notch. The rotation shaft of the wheel is perpendicular to the body. The wheel is attached to the shaft of an electric motor (52) (Figure 16). The grid is provided with the appropriate power supply (11) (Figure 13) and conventional electronic control (12) (Figure 13). When the button (53) (Figures 14 and 15) is pressed, the electric motor is actuated, which rotates the wheel one full turn, picking up a relief element from the container with the notch. When the notch of the wheel passes through the outlet tube, the relief element falls. The container has a cap (55) (Figure 13) through which the relief elements can be removed and inserted.
- A grid for picking up and putting down relief elements (1) (Figure 19) individually, by means of air suction is proposed. This grid body (56) (Figures 17 and 18), has a cylindrical cavity (58) (Figures 18 and 19) from the tip (57) (Figure 18) until connecting with a suction bulb (59) (Figures 17, 18 and 19). On pressing and releasing pressure from the suction bulb, a relief element remains attached to the tip by the action of the vacuum. The suction bulb (59) (Figure 19) has to be pressed again in order to release the relief element.
- A grid for picking up and putting down relief elements (1) (Figures 21 and 22) individually, by means of air suction and conventional mechanical elements, is proposed. This grid is formed by a body (60) (Figures 20, 21 and 22) that contains a container (61) (Figures 20, 21 and 22), for storing the relief elements. It has an outlet tube (64) (Figure 22) connected to the container (61) (Figures 21 and 22), whose path has been interrupted by the conventional dispensing mechanism (65) (Figures 21 and 22) such as a gate valve, gear, wheel or lever. By actuating the dispensing mechanism, a relief element from the container is transferred to the outlet tube by the force of gravity. There is an inlet tube (66) (Figures 21 and 22) ascending to the inside of the vacuum chamber (67) (Figure 21). When the inlet tube enters the vacuum chamber, it has an elbow bend (68) (Figure 21) from which a sloped plane (69) (Figure 21) connecting to the container branches. The body contains a motor (70) (Figures 20 , 21 and 22) located on the vacuum chamber and a number of vanes (71) (Figure 21). The inlet tube has at least one opening (72) (Figure 21) for suctioning, after the right-angled section (68) (Figure 21) next to the ramp area (69) (Figure 21). The grid is provided with the appropriate power supply (11) (Figure 20) and conventional electronic control (70) (Figure 21). The container has a cap (74) (Figure 21) through which the relief elements can be removed and inserted.
- A grid for picking up and putting down relief elements (1) (Figures 24 and 25) individually, adjusting by pressing and pushing. This grid is formed by a body (75) (Figures 23, 24 and 25) that contains a container (76) (Figures 23, 24 and 25) for storing the relief elements (1) (Figures 24 and 25). The body has a piston (77) (Figure 25) affixed thereto. The grid has a tube (78) (Figures 23, 24 and 25) for the relief elements to pass through and for the outer wall thereof to slide inside the body (75) (Figures 23, 24 and 25). The tube (78) (Figures 23, 24 and 25) slides along the inside of the body (75) (Figures 23, 24 and 25), the range of distance being determined by a number of stops (79) (Figure 24), and when the body (75) (Figure 25) slides towards the tip (80) (Figure 25), the piston (77) (Figure 25) pushes the relief elements towards the tip. The pickup actuator (82) (Figures 23, 24 and 25) slides over the outside of the tube (78) (Figure 24), with a range of distance which is determined by the stops (81) (Figure 24). The pickup actuator (82) (Figure 24) has a tube (83) (Figure 24) measuring at least a distance greater than the diameter of a collector element, having interference in its inner diameter relative to the relief element, in order to fasten the relief elements by friction. If there is a relief element partially inserted into the tip when the pickup actuator (82) (Figure 24) is slid towards the tip (80) (Figure 24), the interference fit in the tube (83) (Figure 24) traps said relief element in the tube and moves the remaining relief elements contained therein. The container has a cap (85) (Figure 23) through which the relief elements can be removed and inserted.
- A grid (3) (Figure 26), which is adapted to the ergonomics of the human finger, to pick up and put down the relief elements (1) (Figures 26, 28 and 32) individually, is proposed. This grid can pick up and put down the relief elements using different conventional systems such as the magnetic force with electromagnets (90) (Figure 28), magnets, suction of air by vacuum using a bulb (91) (Figures 29 and 30) or a tacky viscoelastic polymer (92) (Figures 31 and 32). The shape of the grid is adapted to the structure of the finger, made of a flexible material, formed by a cylindrical portion (86) (Figures 28, 30 and 32) adjusted to the distal phalanx, another cylindrical fastening portion (87) (Figures 28, 30 and 32) adjusted to the middle phalanx and joined by a bridge (88) (Figures 28, 30 and 32). The distal phalanx cylinder has a cavity (89) (Figures 27 , 28, 29 and 31), which can hold one relief element (1) (Figures 26, 28 and 32) and having it in place until it is put down. The relief element can be separated from the grid using the fingertip (4) (Figure 26) of another finger.

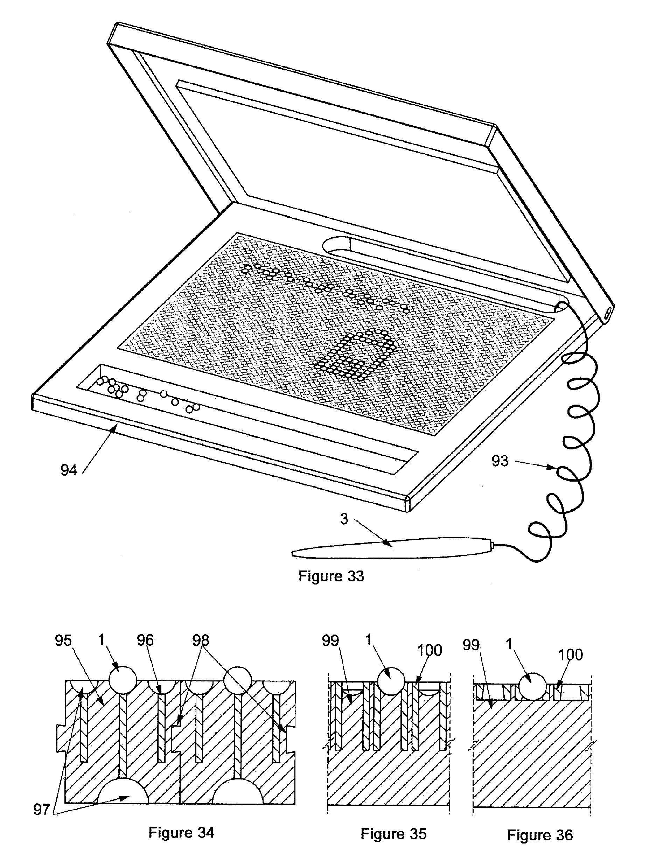

An accessory to the grid (3) (Figure 33) for attachment to the board (94) (Figure 33) with a cord or cable (93) (Figure 33) is proposed, to prevent it from getting lost, as it is very difficult for a blind person to locate the grid if it accidentally drops.

It is proposed that the grid should include indicators for the user when there is a relief element on the tip. This grid (3) (Figures 1 and 26) must have conventional electronic sensors on the tip such as photodiode, photoelectric, inductive, capacitive, conductive or piezoelectric sensors to detect the presence of relief elements (1) (Figures 1 and 26). These sensors may direct the user to the presence of a relief element on the tip via vibratory or acoustic signals.

The different solutions provided by the grids offer new alternatives when combined to form a new grid, or position the required elements for placement at one end of a grid having a fusiform body, and at the other end, the elements required for picking up or erasing.

To prevent the relief elements (1) (Figure 34) which are placed on the panel (95) (Figure 34) from detaching or accidentally moving, said elements are secured by different means such as magnets or electromagnets (96) (Figure 34) inside the hole (97) (Figure 34) of the panel.

Another way to prevent the relief elements (1) (Figures 35 and 36) which are placed on the panel (99) (Figures 35 and 36) from detaching or accidentally moving is to create a tightness of fit using various flexible materials such as elastic polymers (100) (Figures 35 and 36). The holes in the panel matrix have a smaller diameter than that of the relief elements, thereby creating a tightness of fit when these are inserted.

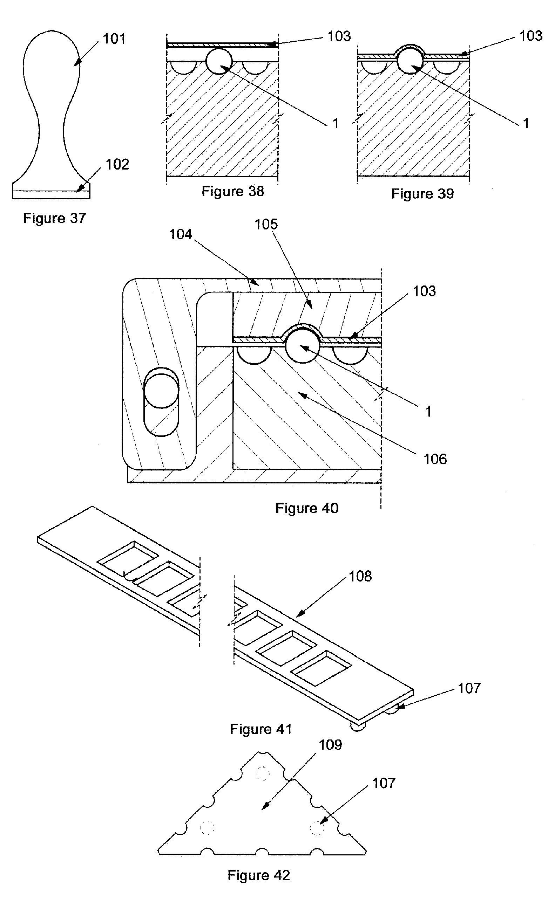

To ensure what has been written or drawn does not become undone during transport, the cover (104) (Figure 40) is closed which presses the relief element (1) (Figure 40) using a flexible material (105) (Figure 40) to fix the relief elements in position.

To maximise the usefulness of the invention, it is proposed for the panel to have two usable faces on which to write or draw. Each side may have a different arrangement or size of holes (97) (Figure 34). By using the two usable faces, various hole patterns can be made either as a braille cross, star or grid, providing greater definition when drawing. In arrangements such as a cross, drawings with multiple levels of relief elements can be made, placing the elements firstly on the panel and then placing the relief elements on those which are already placed.

Another novelty provided by the boards for persons with blindness or visual impairment is not restricting the panels to a fixed dimension, wherein several panels may be joined to form one larger by conventional means such as dovetail (98) (Figure 34), tabs, sections or magnets.

Using this new board is quick and fast, but writing and drawing via the methodology used is not permanent, therefore, simple solutions for obtaining copies proposed by stamping the relief elements (1) (Figures 38, 39 and 40) on a sheet of paper (103) (Figures 38, 39 and 40) are proposed, either for defined surfaces or for the entire content of the board, by using a manual stamp (101) (Figure 37) consisting of a rigid handle and a pad (102) (Figure 37). As a tool for obtaining copies, there is likewise a cover (104) (Figure 40) with a pad made of semi-rigid material (105) (Figure 40) which covers the entire surface of the panel (106) (Figure 40), such that copies can be made and saved or submitted to other persons.

To make learning easier, there are stencils or drawing tools that use the holes in the panel, in order to secure the latter with pins (107) (Figures 41 and 42). Braille writing (108) (Figure 41), drawing (109) (Figure 42) or learning shapes is guided by these stencils. It is further provided with drawing elements such as a compass, set square, rulers or protractor that can be set in the holes with pins.

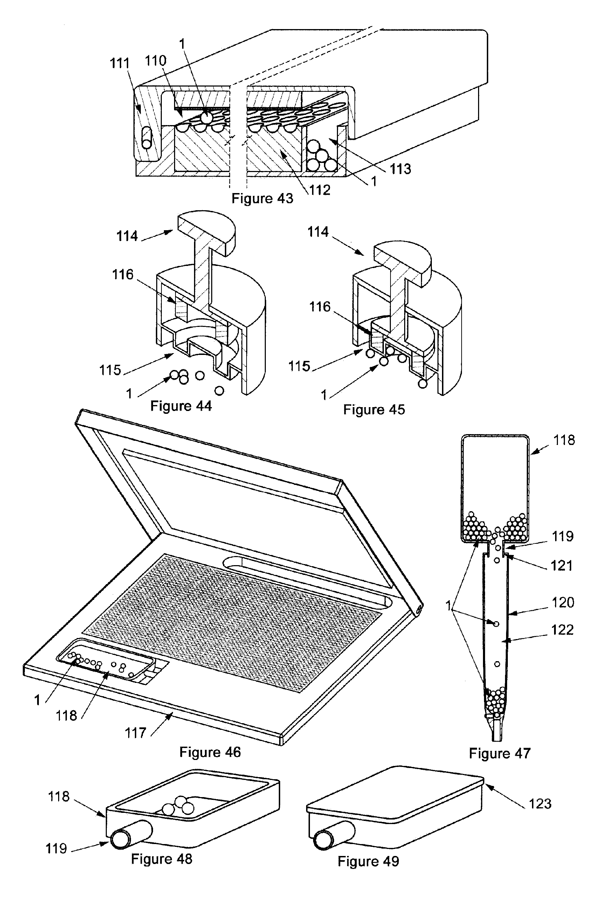

In order to quickly pick up and store said relief elements (1) (Figure 43) in the container (113) (Figure 43), the cover (110) (Figure 43) is placed leaving a gap (110) (Figure 43) with the panel (112) (Figure 43) that is greater than the diameter of the relief elements. By placing the container in the lowest part and by shaking the board, all the relief elements are transferred to the container by gravity, thereby being collected.

Versions are provided in which the new board (117) (Figure 46) for blind persons has a removable container (118) (Figure 46). The relief elements (1) (Figure 46) are stored in the removable container, to subsequently reload the grid container. The grid (120) (Figure 47) is reloaded by placing the cover (123) (Figure 49) in the removable container to prevent the graphic elements from falling. The nozzle (119) (Figure 47) is subsequently inserted through the opening (121) (Figure 47) of the container (122) (Figure 47) of the grid. By placing the removable container and the grid vertically, the relief elements (1) (Figure 47) transfer from the removable container to the grid container by the force of gravity. Said removable container makes it easier to load the grid container.

The board is further provided with a collector (114) (Figures 44 and 45) for picking up paramagnetic relief elements (1) (Figures 44 and 45), formed by bodies intended to contain the relief elements to be picked up and conventional means for bringing them closer, which can vary the intensity of the magnetic field exerted on the cavity (115) (Figures 44 and 45) using at least one magnet (116) (Figures 44 and 45) which moves towards or away from the cavity (115) (Figures 44 and 45) or at least one electromagnet which is activated or deactivated. When the magnet (116) (Figure 45) moves closer or activates the electromagnet and there are relief elements partially inserted into the cavity (115) (Figure 45) of the collector and the force of the magnetic field is greater than that of gravity and the relief elements (1) (Figure 45), they are picked up. On the contrary, when the magnet is moved away or the electromagnet deactivated, the force of gravity is greater than the magnetic force on the relief elements, therefore, when under these conditions the relief elements that are in the cavity (1) (Figure 44) fall. Another way to embody this collector is by using an electromagnet that activates or deactivates.

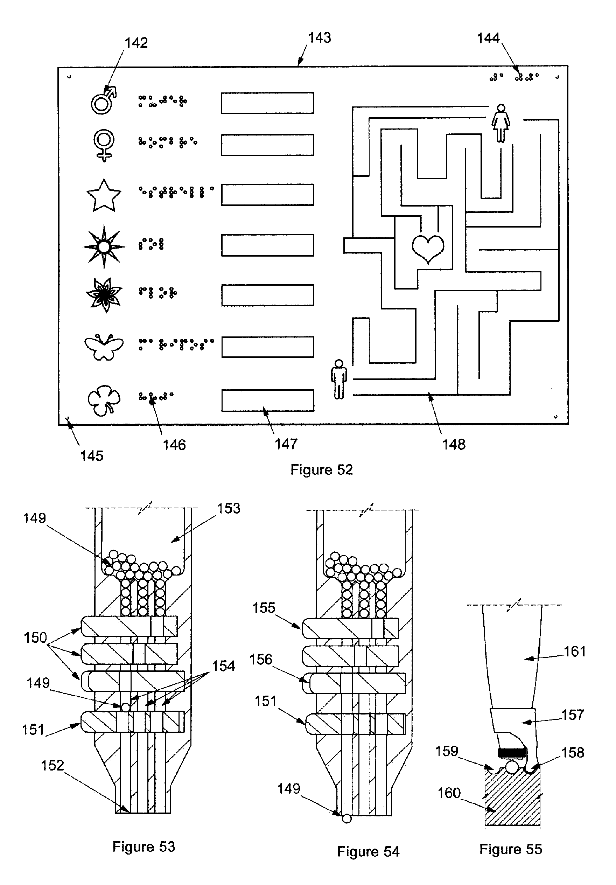

In order to facilitate proper alignment of the tip of the grid (161) (Figure 55) with the holes (159) (Figure 55) of the panel (160) (Figure 55), the grid is provided with an accessory or integral part for quick positioning (157) (Figure 55) with at least one projection (158) (Figure 55) that fits both in dimension and position with the holes (159) (Figure 55) of the panel.

To write more quickly in braille, provision has been made for a version of the grid that can write a predefined character each time. This version of the grid has a tip (152) (Figure 53) with six or eight outlet channels for relief elements (149) (Figures 53 and 54), these channels being distributed in two rows of three or two rows of four channels. The grid is provided with six or eight buttons (150) (Figure 53), which can be in pulsed mode (156) (Figure 54) or unpulsed mode (155) (Figure 54). In pulsed mode, a relief element can pass from the container (153) (Figure 53) to an intermediate container (154) (Figure 53) for each channel, using conventional mechanical or electromechanical means. This grid is provided with an execute button (151) (Figures 53 and 54), which when actuated, causes the relief elements (149) (Figure 53) to transfer from the intermediate container (154) (Figure 53) to the tip (152) (Figure 53). On releasing the execute button (151) (Figures 53 and 54), all buttons in pulsed mode (156) (Figure 54) revert to the unpulsed mode (155) (Figure 54) by conventional mechanical or electrical means.

Versions are provided that improve self-learning and user interactivity with the new panel. This can be connected to a computer (134) (Figure 50), which guides and helps the user to perform various learning and entertainment activities. To interact in this manner, the board has sensors (131) (Figure 50), that detect the cavities containing the relief elements (129) (Figure 50), a detection system (138) (Figure 51) that locates the position of the grid (136) (Figure 51) and a stencil for activities (143) (Figure 52).

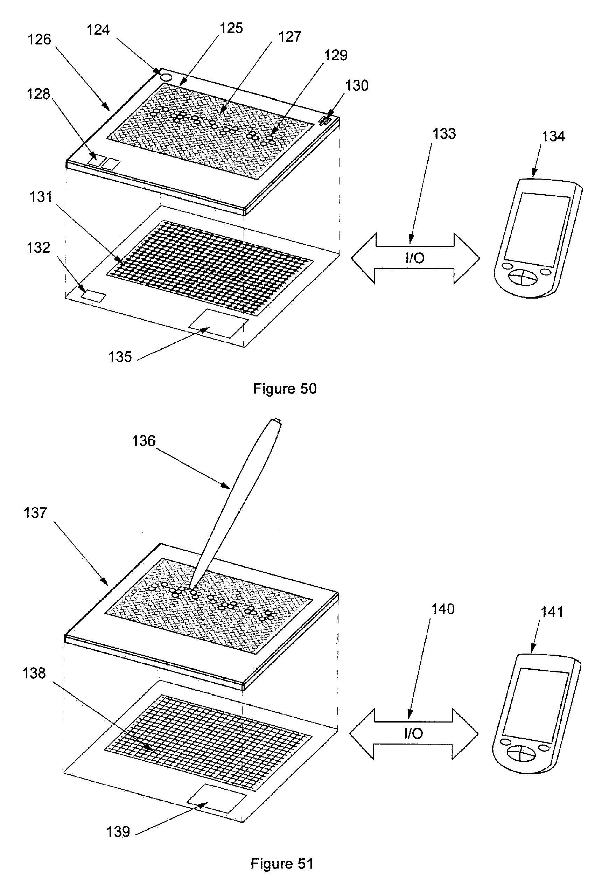

To detect in which cavities (127) (Figure 50) of the panel (125) (Figure 50) there are relief elements, the board (126) (Figure 50) is provided a matrix of conventional sensors (131) (Figure 50) such as a pushbutton, switch, capacitive transducer, photoelectric transducer, electrostatic transducer, piezoelectric transducer, radio acoustic transducer, magnetostrictive transducer, mechanical transducer, thermal transducer, electrical resistive transducer, Hall effect transducer or electromagnetic transducer. The electrical signal generated by the sensors (131) (Figure 50) is conditioned and processed using at least one microcontroller (135) (Figure 50).

To determine the position of the grid (136) (Figure 51), the board is provided with a detection system (138) (Figure 51) which locates the position of the grid (136) (Figure 51) via a conventional communication interface (140) (Figure 51) that transmits information to at least one computer (141) (Figure 51) such as a PC, PDA, Smartphone or tablet PC. This system for detecting (138) (Figure 51) the position of the grid is implemented by using conventional systems such as:
- A capacitive sensor on the panel that detects the pressure of the pen.
- An electromagnetic induction grid on the panel that makes a conventional electronic circuit of the grid resound, thereby determining the position.
- A laser scan on the panel that detects the position of the grid.
- An ultrasonic triangulation system, where at least one speaker and at least one microphone determine the position of the grid.
- A positioning capture system by means of cameras that detect and process the information in order to determine the position of the grid.

The electrical signal generated by the detection system (138) (Figure 51) is conditioned and processed using at least one microcontroller (139) (Figure 51).

To guide using aids that are highly sensory to the sense of touch, the board may include learning stencils (143) (Figure 52) in the form of a moulded sheet, which has an identification code (44) (Figure 52) for the activity and at least one pin (145) (Figure 52) for positioning the stencil in the desired position. In order to do the activity, the learning stencil is provided with at least one of the following elements: symbols and drawings in relief (142) (Figure 52), braille texts in relief (146) (Figure 52), cavities or perforations (147) (Figure 52), games in relief (148) (Figure 52).

For communication with commonly used computer equipment such as a personal computer, PDA, Smartphone or tablet PC, the board has the means for implementing the communication interface (133) (Figure 50) between the board (126) (Figure 50) and computer equipment (134) (Figure 50) such as parallel or serial communication via an RS232, USB or PS2 connection, wireless communication such as infrared, radio frequency or microwave.

To improve the method of use, provision has been made for versions in which the board comprises elements for communication with the user such as vibrators (132) (Figure 50) equipped with an acoustic, electric motor (130) (Figure 50), with loudspeakers or lights (124) (Figure 50), with bulbs or LEDs. The board (126) (Figure 50) is provided with at least one button (128) (Figure 50), to activate various activity selection functions, start of activity, end of activity, reading written text or on and off function.

The microcontroller (135) (Figure 50)-(139) (Figure 51) of the board is responsible for the board logic and guiding activities, via its internal programming and manages the user interface. The microcontroller also controls the communication interface (133) (Figure 50)-(140) (Figure 51) via communication with the computer (134) (Figure 50)-(141) (Figure 51). The board is provided with the appropriate internal or external power supply and conventional electronic circuitry.

This new board may be provided with relief elements, different colours or surface finishes, which make it easier for people with mild visual impairments or without visual impairments to use this board.

### BRIEF DESCRIPTION OF THE DRAWINGS:

For a better understanding of what is described herein, drawings are attached in which, solely by way of example, a list of images of the writing and drawing board for blind persons is shown.

### Description of figures

Figure 1: Relief element (1), panel with a matrix of holes (2), grid (3) and fingertip (4).
Figure 2: Body (5), container (6), power supply (11), electronic control (12), opening of the container (14) and container cap (15).
Figure 3: Relief element (1), container (6), outlet tube (7), tip (8), electromagnet (9), magnet (10) and button (13).
Figure 4: Power supply (11), electronic control (12), body (16), container (17), collection container (18), electromagnets (23), opening of the container (25) and container cap (26).
Figure 5: Relief element (1), body (16), container (17), collection container (18) flap valve (19), inlet tube (20), tip (21), elbow coupling (22), electromagnets (23) and button (24).
Figure 6: Relief element (1), body (16), container (17), collection container (18) and flap valve (19).
Figure 7: Body (27) and piston (29).
Figure 8: Relief element (1), body (27) magnet (28), piston (29) and tip (30).
Figure 9: Relief element (1), body (27) magnet (28), piston (29) tip (30) and container (31).
Figure 10: Body (32), container (33), opening of the container (45) and cap (46).
Figure 11: Relief element (1), container (33), collection tube (40), magnet (41), slide (42), portion of the slide outside the body (43) and stop (44).
Figure 12: Relief element (1), container (33), inlet-outlet tube (34), tip (35), Y branch (36), outlet tube (37), dispensing mechanism (38), inlet tube (39) and collection tube (40).
Figure 13: Power supply (11), electronic control (12), body (47), container (48), opening of the container (54) and cap (55).
Figure 14: Relief element (1), body (47), container (48), outlet tube (49) tip (50), wheel with notch (51) and button (53).
Figure 15: Relief element (1), wheel with notch (51) and button (53).
Figure 16: Relief element (1), wheel with notch (51) and electric motor (52).
Figure 17: Body (56) and suction bulb (59).
Figure 18: Body (56), tip (57), cylindrical cavity (58) and suction bulb (59).
Figure 19: Relief element (1), cylindrical cavity (58) and suction bulb (59).
Figure 20: Power supply (11), body (60), container (61) and electronically-controlled motor (70).
Figure 21: Relief element (1), body (60), container (61), inlet-outlet tube (62), Y branch (63), dispensing mechanism (65), inlet tube (66), vacuum chamber (67), inlet tube elbow bend (68), sloped plane (69), electronically-controlled engine (70), vanes (71) and openings of the inlet tube (72), opening of the container (73) and cap (74).
Figure 22: Relief element (1), body (60), container (61), outlet tube (64), dispensing mechanism (65), inlet tube (66) and electronically-controlled motor (70).
Figure 23: Body (75), container (76), tube (78), pickup actuator (82), opening of the container (84) and cap (85).
Figure 24: Relief element (1), body (75), container (76), tube (78), body and tube stops (79), tip (80), pickup actuator and tube stops (81), pickup actuator (82) and collection tube (83).
Figure 25: Relief element (1), body (75) container (76), piston (77), tube (80), tip (80) and pickup actuator (82).
Figure 26: Relief element (1), panel with a matrix of holes (2), grid (3) and fingertip (4).
Figure 27: Cavity for relief element (89).
Figure 28: Relief element (1), distal phalanx fastener (86), middle phalanx fastener (87), bridge (88), cavity for relief element (89) and electromagnet (90).
Figure 29: Cavity for relief element (89) and bulb with tubes (91).
Figure 30: Distal phalanx fastener (86), middle phalanx fastener (87), bridge (88) and bulb with tubes (91).
Figure 31: Cavity for relief element (89) and tacky viscoelastic polymer (92).
Figure 32: Relief element (1), distal phalanx fastener (86), middle phalanx fastener (87), bridge (88) and tacky viscoelastic polymer (92).
Figure 33: Grid (3), cord or cable (93) and board (94).
Figure 34: Relief element (1), panel (95), magnet or electromagnet (28), hole (97) and panel joint (98).
Figure 35: Relief elements (1), panel (99) and semi-rigid material (100).
Figure 36: Relief elements (1), panel (99) and semi-rigid material (100).
Figure 37: Manual stamp (101) and semi-rigid material (102).
Figure 38: Relief elements (1) and paper (103).
Figure 39: Relief elements (1) and paper (103).
Figure 40: Relief element (1), paper (103) cover (104), semi-rigid material (105) and panel (106).
Figure 41: Pins (107) and braille stencil (108).
Figure 42: Pins (107) and drawing stencil (109).
Figure 43: Relief element (1), gap (110) cover (111), panel (112) and container (113).
Figure 44: Relief element (1), collector (114), cavity (115) and magnet (116).
Figure 45: Relief element (1), collector (114), cavity (115) and magnet (116).
Figure 46: Relief element (1), board (117) and removable container (118).
Figure 47: Relief element that transfers to the grid (1) container, removable container (118), nozzle of removable container (119), grid (120), opening of the grid container (121) and grid container (122).
Figure 48: Removable container (118), nozzle of the removable container (119).
Figure 49: Removable container cover (123).
Figure 50: Light indicator (124), panel with holes (123), board for blind persons (126), hole (127), buttons (128), relief element (129), acoustic indicator (130), sensors (131) vibrator (132), communication interface (133), computer equipment (134) and microcontroller (135).
Figure 51: Grid (136), board for the blind (137), grid detection system (138), microcontroller (139), communication interface (140), computer equipment (141) and
Figure 52: Symbols in relief (142), learning stencil (143), identification code (144), fastening pin (145), braille texts in relief (146), perforation (147) and games in relief (148).
Figure 53: Relief elements (149), six buttons (150), release button (151), tip with six channels (152), grid container (153) and intermediate container (154).
Figure 54: Relief elements (149), release button (151), unpulsed button (155) and pulsed button (156).
Figure 55: Quick-positioning part (157), projection (158), hole in the panel (159), panel (160) and grid (161).

### DESCRIPTION OF A PREFERRED EMBODIMENT:

By way of example a preferred embodiment is cited, the material used in the manufacture of the components of the board and the methods of applications and all accessory details which might arise, as long as they do not affect its essential nature being independent of the object of the invention.

A form of a preferred embodiment of the board, formed by different elements, is proposed:
Panel: To secure the relief elements (1) (Figures 35 and 36) on the panel (99) (Figures 35 and 36) and to prevent them from accidentally moving from or slipping out of the hole when reading using one's fingertip. A tightness of fit is created by using various flexible materials such as elastic polymers (100)(Figure 35 and 36). Said holes are smaller in diameter than that of the relief elements, thereby creating a tightness of fit when these are inserted.
Relief elements: Spherical in shape and made of paramagnetic material.
Grid: To pick up and put down paramagnetic relief elements (1) (Figures 11 and 12) individually, using at least one magnet and conventional mechanical elements. This grid is formed by a body (32) (Figure 10) that contains a container (33) (Figures 10, 11 and 12), for storing the relief elements. It has an inlet-outlet tube (34) (Figure 12) connected to the tip (35) (Figure 12). This inlet-outlet tube has a Y branch (36) (Figure 12). An outlet tube (37) (Figure 12) branches from this Y branch connected to the container (33) (Figure 12), whose path has been interrupted by the conventional dispensing mechanism (38) (Figure 12) such as a gate valve, gear, wheel or lever. By actuating the dispensing mechanism, a relief element from the container is transferred to the outlet tube by the force of gravity. An inlet tube (39) (Figure 12) branches from this Y branch, through which a pickup tube (40) (Figure 11) is moved, which connects to the container, wherein the end of the pickup tube that is oriented towards the tip is a magnet (41) (Figure 11). The grid is provided with a conventional slide (42) (Figure 11). When the slide moves towards the tip, a relief element is inserted into the pickup tube (40) (Figure 11) which pushes the remaining relief elements to the container. The relief elements on the inside of the pickup tube do not fall by the force of gravity because the magnet (41) (Figure 11) retains them by the magnetic force. The container has a cap (46) (Figure 10) through which the relief elements can be removed and inserted.
Fastening cord: To prevent the grid (3) (Figure 33) from getting lost, it is attached to the board (94) (Figure 33) by a cord (93) (Figure 33).
Stamp: A manual stamp (101) (Figure 37), consisting of a rigid handle and a pad (102) (Figure 37), is used in order to make copies on paper, stamping the relief elements (1) (Figures 38 and 39) on a sheet of paper (103) (Figures 38 and 39).
Stencils or drawing tools: to make learning ,writing and drawing easier, there are different stencils or drawing tools that use the holes in the panel, in order to secure the latter with pins (107) (Figures 41 and 42). Braille writing (108) (Figure 41), drawing (109) (Figure 42) or learning shapes is guided by these stencils. It is further provided with drawing elements such as a compass, set square, rulers or protractor that can be set in the holes of the panel with pins.
Collector: for picking up and storing the relief elements (1) (Figure 43) in the container (113) (Figure 43) of the panel. The cover (111) (Figure 43) is placed leaving a gap (110) (Figure 43) greater than the diameter of the relief elements between the cap (111) (Figure 43) and the panel (112) (Figure 43). By placing the container in the lowest part and by shaking the board, all the relief elements are transferred to the container by gravity, thereby being picked up.

## Claims

1. Writing, braille and drawing board for the blind or visually impaired to use paramagnetic relief elements and a panel full of holes to place these elements, **characterised by** having a grid with a fusiform body (5), that contains a container (6) inside the body for storing the paramagnetic relief elements (1). The container is connected via the outlet tube (6) to the tip (8), the diameter of the tube being greater than that of the relief element. There is at least one electromagnet (9) located next to the outlet tube and near the tip. The grid is provided with the appropriate power supply and conventional electronic control. It is provided with a magnet (10) located between the electromagnet and the container. This magnet prevents the relief elements that are inside the container from exiting the grid, as they are attracted by the magnetic force. When the button (13) is pressed, the electromagnet, whose magnetic force is greater than that of the magnet, is activated, and is attracted to the relief element (1) via the outlet tube to the electromagnet. When the button is released, the electromagnet stops generating a magnetic force, which causes the relief element to fall by gravity and exit the grid. The container is connected to the outside of the body via an opening (14) through which the relief elements can be removed and inserted. This opening has a cap (15) which is used to closed the container opening.

2. Writing, braille and drawing board for the blind or visually impaired to use paramagnetic relief elements and a panel full of holes to place these relief elements, **characterised by** having a grid with a fusiform body (16), that contains a container (17) inside the body for storing the paramagnetic relief elements (1), a collection container (18) connecting to the latter, separated by a conventional flap valve (19). There is an inlet tube (20) that commences at the tip (21) and whose diameter is greater than that of the relief element. The tube ascends to an upper portion of the collection container (18) where it connects to a right-angled member (22) There are one or more electromagnets (23) next to and along the inlet tube (20). When the button (24) is pressed, the electromagnets are activated in a sequence in order for the relief element to move from the tip (21) to the last electromagnet located at an upper portion of the collection container, the end of this activation sequence making the relief element fall inside the collection container, by the force of gravity. The grid is provided with the appropriate power supply and conventional electronic control. When the body (16) is placed with the tip (21) in the opposite direction to the force of gravity, the conventional flap valve (19) opens and the relief elements transfer from the collection container (18) to the container (17). The container is connected to the outside of the body via an opening (25) through which the relief elements can be removed and inserted. This opening has a cap (26) which is used to closed the container opening.

3. Writing, braille and drawing board for the blind or visually impaired to use paramagnetic relief elements and a panel full of holes to place these elements, **characterised by** having a grid with a fusiform body (32), that contains a container (33) inside the body for storing the paramagnetic relief elements (1). There is an inlet-outlet tube (34) that connects to the tip (35), whose diameter is greater than that of the relief element. This inlet-outlet tube has a Y branch (36), an outlet tube (37) branching from this Y branch connected to the container (33), whose path is interrupted by the conventional dispensing mechanism (38) such as a gate valve, gear, wheel or lever. By actuating the dispensing mechanism, a relief element from the container is transferred to the outlet tube by the force of gravity. An inlet tube (39) branches from this Y branch, through which a collection tube (40) is moved, which connects to the container (33), wherein the end of the collection tube that is oriented towards the tip is a magnet (41). The grid is provided with a conventional slide (42), which has a portion outside the body (43) in order to be able to move the slide and a stop (44) that moves the pickup tube (40) when the slide moves. When a relief element is partially inserted into the tip and the slide moves towards the tip, a relief element is inserted in the pickup tube (40) pushing the remaining relief elements that are in the pickup tube towards the container. The relief elements on the inside of the pickup tube do not fall by the force of gravity because the magnet (41) retains them by the magnetic force. The container is connected to the outside of the body via an opening (45) through which the relief elements can be removed and inserted. This opening has a cap (46) which is used to closed the container opening.

4. Writing, braille and drawing board for the blind or visually impaired to use relief elements and a panel full of holes to place these relief elements, **characterised by** having a grid with a fusiform body (47), that contains a container (48) inside the body for storing the relief elements (1), connecting via an outlet tube (49) on the tip (50), there being a wheel (51) with at least one notch between the outlet tube and the container. The rotation shaft of the wheel is perpendicular to the larger shaft of the body. The wheel is attached to the shaft of an electric motor (52). The grid is provided with the appropriate power supply and conventional electronic control. When the button (53) is pressed, the electric motor (52)is actuated, which rotates the wheel one full turn, picking up a relief element from the container with the notch, when the notch of the wheel is aligned, the relief element falls through the outlet tube. The container is connected to the outside of the body via an opening (54) through which the relief elements can be removed and inserted. This opening has a cap (55) which is used to closed the container opening.

5. Writing, braille and drawing board for the blind or visually impaired to use relief elements and a panel full of holes to place these relief elements, **characterised by** having a grid with a fusiform body (56), from the tip (57) of which there is a cylindrical cavity (58), with a diameter smaller than that of the relief element until connecting with a suction bulb (59). The suction bulb has a portion outside the body of the drawing grid, that is to be actuated. When the bulb is pressed, the relief element remains attached to the tip by the action of the vacuum.

6. Writing, braille and drawing board for the blind or visually impaired to use relief elements and a panel full of holes to place these relief elements, **characterised by** having a grid with a fusiform body (60), that contains a container (61) inside the body for storing the relief elements (1). There is an inlet-outlet tube (62) for the relief elements, whose diameter is greater than that of the relief element. This inlet-outlet tube has a Y branch (63), an outlet tube (64) branching from this Y branch connected to the container (61), whose path is interrupted by the conventional dispensing mechanism (65) such as a gate valve, gear, wheel or lever. By actuating the dispensing mechanism, a relief element from the container is transferred to the outlet tube by the force of gravity. An inlet tube (66) ascending to the inside of the vacuum chamber (67) located on the container branches from the Y branch (63). When the inlet tube enters the vacuum chamber, it has an elbow bend (68) from which a sloped plane (69) connecting to the container branches. The body contains a motor (70) positioned on the vacuum chamber and a number of vanes (71) attached to the motor, positioned inside the vacuum chamber. The inlet tube has a number of openings (72) for suctioning, after the right-angled section (68) next to the ramp area (69). The grid is provided with the appropriate power supply and conventional electronic control. The container is connected to the outside of the body via an opening (73) through which the relief elements can be removed and inserted. This opening has a cap (74) which is used to closed the container opening.

7. Writing, braille and drawing board for the blind or visually impaired to use relief elements and a panel full of holes to place these relief elements, **characterised by** having a grid with a fusiform body (75), that contains a container (76) inside the body for storing the relief elements (1). The body has a piston (77) integrally affixed thereto, having a diameter smaller than that of the relief elements (1). The grid has a tube (78), whose inner diameter is greater than the relief elements and its outer wall slides inside the fusiform body (75). The tube (78) slides along the inside of the body (75), the range of distance being determined by a number of stops (79), and when the body (75) slides towards the tip (80), the piston (77) pushes the relief elements towards the tip (80). The pickup actuator (81) slides along the tube (78), with a range of distance which is determined by the stops (81). The pickup actuator (82) has a tube (83) measuring at least a distance greater than the diameter of a pickup element, having interference in its inner diameter relative to the relief element, in order to fasten the relief elements by friction. If there is a relief element partially inserted into the tip when the pickup actuator (82) is slid towards the tip (80), the interference fit in the tube (83) traps said relief element in the tube and moves the remaining relief elements contained therein. The container is connected to the outside of the body via an opening (84) through which the relief elements can be removed and inserted. This opening has a cap (85) which is used to closed the container opening.

8. Writing, braille and drawing board for the blind or visually impaired to use relief elements and a panel full of holes to place said relief elements, **characterised by** having a grid that adapts to the structure of the human finger, the body being made of a flexible material, forming a cylindrical portion (86) adjusted to the distal phalanx, another cylindrical fastening portion (87) adjusted to the middle phalanx and joined by a bridge (88). The distal phalanx cylinder has a cavity (89), which can hold one relief element (1) by means of an electromagnet (90), vacuum suction with bulb (91) or a tacky viscoelastic polymer (92). The relief element can be separated from the grid using another finger.

9. Claim dependent on claims 1 to 8, **characterised by** the grid having a cord or cable (93) that keeps it attached to the board (94), also by having conventional electronic sensors such as photodiode, photoelectric, inductive, capacitive or piezoelectric sensors to detect for the presence of relief elements (1)on the tip of the grid. These sensors can direct the user to the presence of a relief element on the tip via touch-sensitive, vibratory or acoustic signals.

10. Writing, braille and drawing board for the blind or visually impaired to use paramagnetic relief elements and a panel full of holes to place these relief elements, **characterised by** having a panel with holes (95) magnetised with magnets or electromagnets (96), securing the position of the relief element.

11. Claim dependent on claims 10 to 11, **characterised by** having a panel (95) with two sides that can be used, on which each side can have a different arrangement or size of holes (97). The panel is provided with conventional attachment or assembly means (98) such as dovetail, tabs, sections or magnets with which various panels can be joined (95) to (98) form a larger panel.

12. Writing, braille and drawing board for the blind or visually impaired to use paramagnetic relief elements and a panel full of holes to place these relief elements, **characterised by** having a panel (96) on which the surface that forms the holes is made from an elastic polymer (100). Said holes are smaller in diameter than that of the relief elements, thereby creating a tightness of fit when these are inserted.

13. Writing, braille and drawing board for the blind or visually impaired to use relief elements and a panel full of holes to place said relief elements, which makes it possible to stamp the paper with the relief elements, **characterised by** having a manual stamp (101) consisting of a pad made from a semi-rigid material (102). Paper (103) is placed on the board and is pressed using the stamp, marking the relief elements (1) in the area encompassing the stamp (101).
There is likewise a cover (104) with a pad made of semi-rigid material (105) which covers the entire surface of the panel (106), such that paper can be stamped manually.

14. Writing, braille and drawing board for the blind or visually impaired to use paramagnetic relief elements and a panel full of holes to place these relief elements, **characterised by** having stencils that can be set in the holes of the panel by means of a number of pins (107). The braille writing (108), drawing (109) or learning shapes is guided by these stencils. It is further provided with drawing elements such as a compass, set square, rulers or protractors that can be set in the holes by means of pins (107).

15. Writing, braille and drawing board for the blind or visually impaired that use relief elements and a panel full of holes to place said relief elements, **characterised by** having a cover (111) for collecting the relief elements, which is placed leaving a gap (110) between the cover (111) and the panel (112) greater than the diameter of the relief elements, enabling these elements to reach the container (113) when the panel is shaken. This container may be removable and be provided with a nozzle for loading the container of the grid.
The board is further provided with a collector (114) for picking up paramagnetic relief elements (1), which can vary the intensity of the magnetic field exerted on the cavity (115), using at least one magnet (116) which moves towards and away from the cavity (115) by conventional mechanical means such as slide or piston.
The board is further provided with a removable container (118), which occupies the space taken by the container of the board. One side of the removable container (118) is open, which is closed by using the cover (123). The removable container has a nozzle (119), which connects to the inside of the removable container and which fits into the opening (121) of the container (122) of the grid (120).

16. Writing, braille and drawing board for the blind or visually impaired to use relief elements and a panel full of holes to place said relief elements, **characterised by** having conventional sensors (131) that detect which cavities (127) of the panel (125) the relief element (129) is positioned in, and the information is transmitted through a standard communication interface (133) to at least one computer (134). The sensors (131) are conventional ones such as a pushbutton, switch, capacitive transducer, photoelectric transducer, electrostatic transducer, piezoelectric transducer, radio acoustic transducer, magnetostrictive transducer, mechanical transducer, thermal transducer, electrical resistive transducer, Hall effect transducer or electromagnetic transducer. Computer equipment is commonly used such as a personal computer, PDA, Smartphone or tablet PC. The communication interface means (133) between the board (126) and the computer (134) are the conventional means such parallel or serial communication via an RS232, USB or PS2 connection, wireless communication such as infrared, radio frequency or microwave. The board may be provided with elements for communicating with the user such as vibrators (132) equipped with an acoustic, electric motor (130), with loudspeakers or lights (124) with bulbs or LEDs. The board (126) is provided with at least one button (128), to activate various activity selection functions, start of activity, end of activity, reading written text or on and off function. The electrical signal generated by the sensors (131) is conditioned and processed using at least one microcontroller (135). The microcontroller (135) is responsible for the board logic via its internal programming and manages the user interface. The microcontroller also controls the communication interface (113) via communication with the computer equipment (134). The board is provided with the appropriate internal or external power supply and conventional electronic circuitry.

17. Writing, braille and drawing board for the blind or visually impaired to use relief elements and a panel full of holes to place said relief elements, **characterised by** having a detection system (138) that locates the position of the grid (136) by means of a conventional communication interface (140) that transmits information to at least one computer (141) such as a PC, PDA, Smartphone or tablet PC. This system for detecting (138) the position of the grid is implemented by using conventional systems such as:
- A capacitive sensor on the panel that detects the pressure of the pen.
- An electromagnetic induction grid on the panel that makes a conventional electronic circuit of the grid resound, thereby determining the position.
- A laser scan on the panel that detects the position of the grid.
- An ultrasonic triangulation system, where at least one speaker and at least one microphone determine the position of the grid.
- A positioning capture system by means of cameras that detect and process the information in order to determine the position of the grid.
The electrical signal generated by the detection system (138) is conditioned and processed using at least one microcontroller (139). The microcontroller (139) is responsible for the board logic via its internal programming and manages the user interface. The microcontroller also controls the communication interface (113) via communication with the computer equipment (141). The board (137) is provided with the appropriate internal or external power supply and conventional electronic circuitry.

18. Writing, braille and drawing board for the blind or visually impaired to use active or passive relief elements and comprises the appropriate electronic control, **characterised by** having learning stencils (143) in the form of a moulded sheet, which has an identification code (144) of the activity and at least one pin (145) for positioning the stencil in the desired position. In order to do the activity, the learning stencil is provided with at least one of the following elements: symbols and drawings in relief (142), braille texts in relief (146), cavities or perforations (147), games in relief (148). The control logic and guiding activities and games is performed using a computer or microcontroller independently of the learning stencil (143).

19. Writing, braille and drawing board for the blind or visually impaired to use relief elements and a panel full of holes to place said relief elements, **characterised by** having a grid that has a tip (152) with six or eight outlet channels for the relief elements (149), said channels distributed in two rows of three or two rows of four channels, in order to write a character from the braille alphabet. The grid is provided with six or eight buttons (150), which can be in pulsed mode (156) or unpulsed mode (155). In pulsed mode, a relief element can pass from the container (153) to an intermediate container (154) for each channel, using conventional mechanical or electromechanical means. This grid is provided with an execute button (151), which when actuated, causes the relief elements (149) to transfer from the intermediate container (154) to the tip (152). On releasing the execute button (151), all buttons in pulsed mode (156) revert to the unpulsed mode (155) by conventional mechanical or electrical means.

20. Claim dependent on claims 1 to 8, **characterised by** having an accessory or integral part for quick positioning (157) that aligns the tip of the grid with at least one hole (159) in the panel (160), that is provided with at least one projection (158) that fits both in dimension and position with the holes (159) of the panel.
